# EUROPEAN PATENT SPECIFICATION

(11) **EP 4 286 081 B1**
(45) Date of publication and mention of the grant of the patent: **20.05.2026**
(21) Application number: 21923257.6
(22) Date of filing: 23.12.2021
(51) Int. Cl.: B23B 19/02, F16C 19/16, F16C 33/38, F16C 33/58, F16C 33/66, F16C 35/12, F16N 31/00, B23Q 11/12

(54) **BEARING DEVICE AND SPINDLE DEVICE**
LAGERVORRICHTUNG UND SPINDELVORRICHTUNG
DISPOSITIF DE PALIER ET DISPOSITIF DE BROCHE

(30) Priority: 01.02.2021 JP 2021014410
(43) Date of publication of application: 06.12.2023
(73) Proprietor: NSK Ltd., Tokyo 141-8560 (JP)
(72) Inventor: OGURI, Shoichiro, Fujisawa-shi, Kanagawa 252-0811 (JP); IWASAKI, Osamu, Fujisawa-shi, Kanagawa 252-0811 (JP)
(74) Representative: Grünecker Patent- und Rechtsanwälte PartG mbB
(86) International application number: PCT/JP2021/048062
(87) International publication number: WO 2022/163254

(56) References cited:
- DE-T5- 112012 002 734
- JP-A- 2004 332 928
- JP-A- 2004 332 928
- JP-A- 2006 046 454
- JP-A- 2015 113 956
- JP-B2- 5 098 564
- US-B2- 8 235 176

## Description

### TECHNICAL FIELD

The present invention relates to improvements in a bearing device and a main spindle device.

### BACKGROUND ART

In the related art, oil lubrication or grease lubrication such as jet lubrication, oil mist, and oil-air lubrication is used for a bearing device that supports a spindle for a machine tool or the like. In recent years, with the speeding up of the spindle, a lean lubrication method of intermittently attaching a small amount of lubricating oil to the raceway and rolling contact surfaces of rolling bearings at high speed, and a lubrication method of intermittently replenishing grease into the rolling bearing space are developed, which improves performance at high speeds of dmN 1,000,000 or higher (dm: rolling bearing pitch circle diameter (mm), N: rotational speed (min⁻¹)). In a lubricating device that supplies or replenishes a lubricant such as lubricating oil or grease to the bearing described above, appropriately discharging the supplied lubricant is an important factor in minimizing the agitation resistance of the lubricant accompanying rotation of the spindle and avoiding temperature rise and torque increase in the bearing.

Patent Literature 1 describes a bearing device including a lubricant supply path for supplying lubricant from the outside to the inside of an angular contact ball bearing, and a discharge spacer as a rotating body disposed in the vicinity of the inner and outer rings on the side surface of the angular contact ball bearing, in which the lubricant is discharged to the outside of the angular contact ball bearing by the rotation of the discharge spacer, and a main spindle device. According to this, it is possible to stably perform a continuous operation for a long period of time, maintain a good grease lubrication state, and prolong the service life of the bearing.

### CITATION LIST

### PATENT LITERATURE

Patent Literature 1: JP2004-332928A

### SUMMARY OF INVENTION

### TECHNICAL PROBLEM

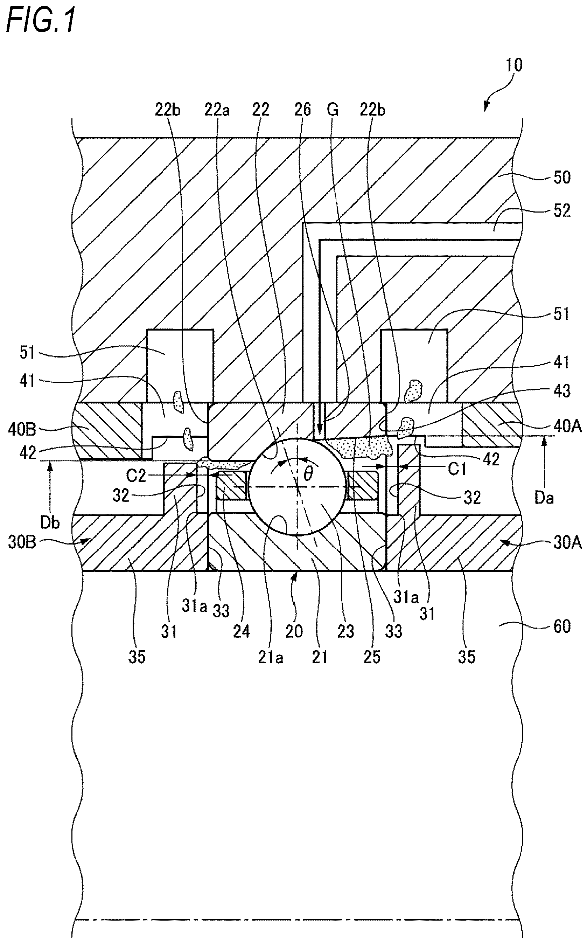

However, since the bearing device and the main spindle device described in Patent Literature 1 are configured to further supply lubricant into the bearing space filled with the lubricant by continuous supply so as to push the lubricant to the outside of the bearing, the force that discharges the lubricant to the outside of the bearing is small. In particular, although the radial clearance between the discharge flange of the discharge spacer and the end surface of the outer ring of the bearing is specified to be 0.1 to 3 mm (FIG. 1), when the side surface of the discharge flange on the rolling bearing side and the end surface of the outer ring of the bearing are flush with each other, the lubricant bounces back on the side surface of the discharge flange on the rolling bearing side, and the force that discharges the lubricant to the outside of the bearing is small. Therefore, for sufficiently discharging the lubricant into the storage space provided in the housing and continuously replenishing the lubricant for a long period of time, there is room for further improvement.

Further, Patent Literature 1 discloses a configuration in which the discharge flange has a tapered surface, but a sufficient distance cannot be ensured between the tip of the tapered surface and the end surface of the outer ring of the bearing. That is, it is not possible to ensure a sufficient space for storing grease up to the storage space.

The present invention has been made in view of the problems described above, and an object the present invention is to provide a bearing device and a main spindle device capable of continuously discharging a supplied lubricant, maintaining a good lubrication state, stably performing a continuous operation for a long period of time, and prolonging the service life of a bearing, and facilitating maintenance.

### SOLUTION TO PROBLEM

The above object of the present invention is achieved by the following configurations.
(1) A bearing device including a rolling bearing and an inner ring spacer disposed adjacent to an inner ring of the rolling bearing, the bearing device supplying a lubricant from a radial outside to an inside of the rolling bearing via a lubricant supply path,
   in which the inner ring spacer has a flange portion formed to protrude radially outward,
   a base portion of the flange portion is axially separated from an end surface of the inner ring spacer in contact with the inner ring, and
   a side surface of the flange portion on the rolling bearing side has a disk-shaped flat surface extending radially outward from the base portion of the flange portion, and
   an axial clearance between the side surface of the flange portion on the rolling bearing side and an axial end surface of an outer ring of the rolling bearing is 0.5 mm to 50 mm, and
   a space for storing the lubricant pushed out from the inside of the rolling bearing to the outside in an axial direction is formed at the base portion of the flange portion.
(2) A main spindle device for a machine tool, in which a spindle is rotatably supported by the bearing device described in (1).
(3) A main spindle device for a high-speed motor, in which a spindle is rotatably supported by the bearing device described in (1).

### ADVANTAGEOUS EFFECTS OF INVENTION

According to the bearing device of the present invention, the base portion of the flange portion is axially separated from the end surface of the inner ring spacer in contact with the inner ring, and the side surface of the flange portion on the rolling bearing side has a disk-shaped flat surface extending radially outward from the base portion of the flange portion, so that the lubricant remaining inside the rolling bearing is pushed and discharged to the outside of the rolling bearing by supplying the lubricant, and also the lubricant adhering to the flange portion of the inner ring spacer is repelled to the outer diameter side by a centrifugal force and is forcibly and continuously discharged to the outside of the bearing. As a result, it is possible to continuously discharge the supplied lubricant, maintain a good lubrication state, and stably perform a continuous operation for a long period of time. Either grease or oil is effective as a lubricant, and heat generation can be reduced by reducing agitation resistance, thereby prolonging the service life of the bearing.

Further, according to the main spindle device for the machine tool and the main spindle device for the high-speed motor of the present invention, the spindle is rotatably supported by the bearing device described above, so that the agitation resistance of the lubricant accompanying rotation of the spindle can be reduced to a low level to reduce temperature rise and torque increase in the bearing, thereby prolonging the service life of the bearing and facilitating maintenance.

### BRIEF DESCRIPTION OF DRAWINGS

FIG. 1 is a cross-sectional view of a main part of a bearing device according to a first embodiment of the present invention.
FIG. 2 is a cross-sectional view of a main part of a lubricant discharge structure on a counterbore side of a bearing device according to a first modification of the first embodiment.
FIG. 3 is a cross-sectional view of a main part of a bearing device according to a second modification of the first embodiment.
FIG. 4 is a cross-sectional view of a main part of a bearing device according to a third modification of the first embodiment.
FIG. 5 is a cross-sectional view of a main part of a bearing device according to a second embodiment of the present invention.
FIG. 6 is a cross-sectional view of a main part of a bearing device according to a third embodiment of the present invention.
FIG. 7 is a cross-sectional view of a main part of a lubricant discharge structure on a counterbore side of a bearing device according to a modification of the third embodiment.
FIG. 8 is a cross-sectional view of a main part of a bearing device according to a fourth embodiment of the present invention.
FIG. 9 is a cross-sectional view of a main part of a bearing device according to a modification of the present invention.
FIG. 10 is a cross-sectional view showing a main spindle device for a machine tool to which the bearing device of the present invention is applied.

### DESCRIPTION OF EMBODIMENTS

Hereinafter, a bearing device according to each embodiment of the present invention will be described in detail with reference to the drawings. Moreover, the bearing device of each embodiment is preferably used in a main spindle device that supports a spindle for a machine tool or a spindle for a high-speed motor such as an AC servomotor.

### (First embodiment)

FIG. 1 is a cross-sectional view of a main part of a bearing device according to a first embodiment of the present invention. A bearing device 10 of the present embodiment includes a rolling bearing 20, inner ring spacers 30A and 30B arranged adjacent to an inner ring 21 of the rolling bearing 20 on both axial sides, outer ring spacers 40A and 40B arranged adjacent to an outer ring 22 on both axial sides, a housing 50 to which the outer ring 22 and the outer ring spacers 40A and 40B are internally fitted, and a spindle (rotating shaft) 60 to which the inner ring 21 and the inner ring spacers 30A and 30B are externally fitted.

The rolling bearing 20 of the present embodiment is an angular contact ball bearing, and includes the inner ring 21, the outer ring 22, a plurality of balls 23 which are rolling bodies disposed to freely roll with a contact angle θ between an inner ring raceway surface (inner ring raceway groove) 21a of the inner ring 21 and an outer ring raceway surface (outer ring raceway groove) 22a of the outer ring 22, and a cage 24 rotatably holding the plurality of balls 23. The outer ring 22 has a tapered counterbore 25 on an inner peripheral surface on one side in an axial direction with respect to the outer ring raceway surface 22a, and an oil supply hole 26 penetrating in a radial direction and opening to the counterbore 25 closer to the outer ring raceway surface 22a.

Further, the rolling bearing 20 of the present embodiment has a configuration in which axial positions of axial end surfaces of the inner ring 21 and the outer ring 22 are the same, and a bearing space between an outer peripheral surface of the inner ring 21 and an inner peripheral surface of the outer ring 22 is open to the outside on both axial sides without having a sealing member.

Each of the inner ring spacers 30A and 30B has a cylindrical portion 35 fitted to the spindle 60 and a flange portion 31 protruding radially outward from an outer peripheral surface of the cylindrical portion 35. A base portion 31a of the flange portion 31 is axially separated from an end surface 33 of the cylindrical portion 35 in contact with the inner ring 21, and a side surface 32 of the flange portion 31 on the rolling bearing side is formed as a disk-shaped flat surface extending radially outward from the base portion 31a of the flange portion 31.

As a result, between the flange portion 31 of the inner ring spacers 30A and 30B and an axial end surface of the rolling bearing 20 (an axial end surface 22b of the outer ring 22), a space having predetermined axial clearances C1 and C2 between the side surface 32 of the flange portion 31 on the rolling bearing side and the axial end surface of the rolling bearing 20 is formed from the outer peripheral surface of the cylindrical portion 35a of the inner ring spacers 30A and 30B to an outer diameter side.

It is to be noted that since the rolling bearing 20 employs an outer ring width and an inner ring width that are substantially the same within a tolerance range, in the present embodiment, the predetermined axial clearance C1 is the same regardless of whether the axial clearance C1 is calculated from the axial end surface 22b of the outer ring 22 or from the axial end surface of the inner ring 21 (the axial clearance C2 is likewise C1).

In the present embodiment, the flange portion 31 of the inner ring spacer 30B closer to the counterbore is formed with a larger diameter than the flange portion 31 of the inner ring spacer 30A on an anti-counterbore side.

The outer ring spacers 40A and 40B include a plurality of notches (openings) 41 formed by axially cutting out a plurality of portions in a circumferential direction of the outer ring spacers 40A and 40B from an end surface 43 in contact with the outer ring 22. In addition, on each of inner peripheral surfaces of the outer ring spacers 40A and 40B on the rolling bearing side, which overlap with the notches 41 in the axial direction, a larger diameter portion 42 is formed with a larger diameter than the rest of the inner peripheral surface so as to prevent interference with the flange portion 31 of the inner ring spacers 30A and 30B.

In addition, the inner diameter of each larger diameter portion 42 is set to be equal to or greater than the inner diameters of opposing axial end surfaces of the outer ring 22 (hereinafter also referred to as end inner diameters) Da and Db, so that a lubricant G adhering to the inner peripheral surface of both shoulders of the outer ring 22 is easily pushed to an outside of the rolling bearing 20.

Therefore, when the inner diameters of the outer ring spacers 40A and 40B are equal to or greater than the end inner diameters Da and Db of the outer ring 22 and do not interfere with the flange portions 31 of the inner ring spacers 30A and 30B, the larger diameter portion 42 may not be formed.

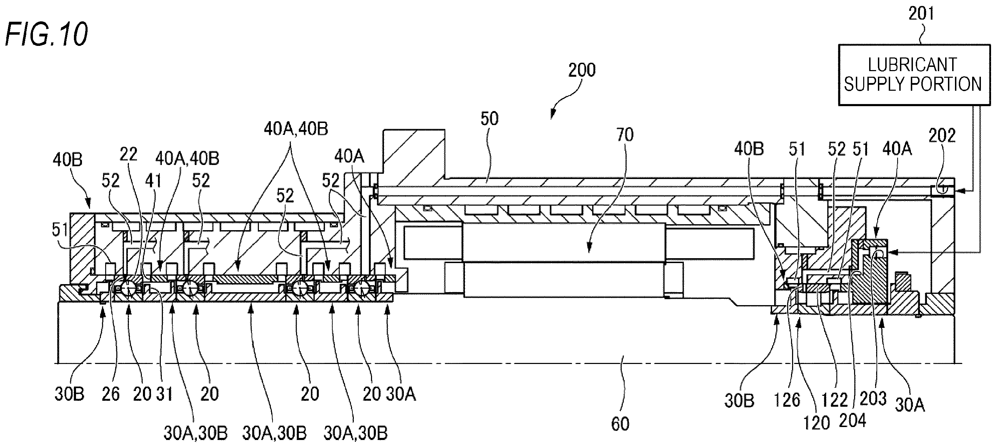

The housing 50 also includes a pair of lubricant storage spaces 51 and 51 formed on the inner peripheral surface, and a lubricant supply path 52 for supplying the lubricant G to the inside of the rolling bearing 20 from the outside. The lubricant storage space 51 is an annular space formed on the outer peripheral side of the notch 41, and the bearing space of the rolling bearing 20 communicates with the lubricant storage space 51 via the space between the outer peripheral surfaces of the inner ring spacers 30A and 30B and the inner peripheral surfaces of the outer ring spacers 40A and 40B and the notch 41. The lubricant supply path 52 connects the oil supply hole 26 of the outer ring 22 to a lubricant supply portion 201 (see FIG. 10) provided outside.

In the bearing device 10 configured in this manner, the lubricant G supplied from the outside is supplied to the rolling bearing 20 via the lubricant supply path 52 and the oil supply hole 26 of the outer ring 22. For example, when the lubricant G is grease, a predetermined amount of grease is periodically replenished at predetermined intervals. The lubricant G supplied to the inside of the rolling bearing 20 lubricates each part of the rolling bearing 20, and some remain inside the rolling bearing 20. Of the lubricant G remaining inside the rolling bearing 20, the lubricant G that is no longer needed is pushed and discharged to the outside of the rolling bearing 20 and adheres to the flange portions 31 of the inner ring spacers 30A and 30B disposed in the vicinity of the bearing.

The lubricant G adhering to the flange portion 31 is repelled to the outer diameter side by a centrifugal force, is forcibly and continuously discharged to the lubricant storage space 51 via the notches 41 of the outer ring spacers 40A and 40B, and is stored in the lubricant storage space 51.

In addition, since the lubricant G pushed out from the bearing space to an outside in the axial direction is also stored in a space formed in the base portion 31a of the flange portion 31, the lubricant G stored in the space also adheres to the flange portion 31 and is efficiently repelled to the outer diameter side.

Further, the discharging by the flange portion 31 can balance a supply amount and a discharge amount of the lubricant G according to the difference in the rotational speed of the rolling bearing 20. For example, in the case of high-speed rotation, it is necessary to increase the supply amount of the lubricant G in order to prevent premature damage due to depletion of the lubricant G due to heat generation. However, when the supply amount is excessively increased, the lubricant G is excessive, and may cause unstable temperature rise and abnormal heat generation. However, since the inner ring spacers 30A and 30B (flange portion 31) are rotating at high speed, the centrifugal force is large, and the discharge amount of the lubricant G is increased accordingly, and accordingly, even when the supply amount is increased, the amount of the lubricant G remaining inside the rolling bearing 20 does not increase, and an appropriate amount of the lubricant G can be kept inside and in the vicinity of the rolling bearing 20.

On the other hand, in the case of low-speed rotation, even when the supply amount is reduced, since the centrifugal force of the inner ring spacers 30A and 30B (flange portion 31) is small, the discharge amount of the lubricant G is not increased and the lubricant G is not excessively discharged. By providing the flange portion 31 on the inner ring spacers 30A and 30B in this manner, the supply amount and the discharge amount of the lubricant G are appropriately set in line with the rotational speed, thereby always obtaining a good lubricating environment.

Either grease or oil is effective as the lubricant G, and heat generation can be reduced by reducing agitation resistance. Further, when the lubricant storage space 51 is filled with the lubricant G, it is necessary to discharge the lubricant to the outside of the bearing device 10, but according to the present embodiment, by providing a discharge passage (not shown) that communicates the lubricant storage space 51 provided in the housing 50 with an external space and sucking the lubricant G from the outside, most of the lubricant G can be discharged, thereby facilitating maintenance. In particular, in the case of oil replenishment lubrication, the discharge passage with the external space is effective.

In the related discharge spacer described in Patent Literature 1, the side surface of the discharge flange on the rolling bearing side and the end surface of the rolling bearing are flush with each other, and it is conceivable that the discharge of the lubricant is not always good. This is because the clearance between the bearing leading to the storage space and the discharge flange is so narrow that the lubricant returns to the bearing without being discharged to the housing side. Due to this effect, when the agitation resistance increases suddenly, abnormal heat generation may occur. Specifically, in many cases, when the lubricant is blown away from the discharge spacer by the centrifugal force, the lubricant adhering to the rotating discharge spacer adheres to the inner diameter surface of the outer ring and is hardly moved to the storage space on the housing side.

On the other hand, in the bearing device 10 of the present embodiment, the axial clearances C1 and C2 between the side surface 32 of the flange portion 31 on the rolling bearing side and the axial end surface 22b of the outer ring 22 are set to C1, C2 = 0.5 to 50 mm, preferably 0.5 to 20 mm, and more preferably 0.5 to 5 mm. When the axial clearances C1 and C2 are smaller than 0.5 mm, there is a concern in that the discharge of the lubricant G described above is difficult, and the difference in thermal expansion between the inner ring 21 and the outer ring 22 may cause the outer ring 22 and the flange portion 31 to come into contact with each other. Further, when the distance is larger than 50 mm, there is a possibility that the lubricant G has difficulty reaching the flange portion 31, that is, the lubricant G is not discharged by the flange portion 31, and a large amount of lubricant G may remain in the vicinity of the bearing.

In addition, the flange portion 31 of the inner ring spacers 30A and 30B effectively discharges the lubricant G by a so-called slinger effect. The slinger effect herein refers to an effect in which, because the peripheral speed on the outer diameter side of the flange portion 31 is faster than the peripheral speed on an inner diameter side of the flange portion 31, an air flow from the inner diameter side toward the outer diameter side of the flange portion 31 is generated as the air pressure on the outer diameter side decreases.

The side surface 32 of the flange portion 31 on the rolling bearing side may be provided with a slit, a spiral groove, or other irregularities that accelerate the fluidity of the lubricant. By providing slits or grooves in the flange portion 31 to generate a turbulent flow of air, there is also an effect that the air in the rolling bearing 20 is circulated and heat is less likely to accumulate, reducing temperature rise. Furthermore, in the bearing device 10 of the present embodiment, since the axial clearances C1 and C2 are provided, air circulation is further promoted, and early deterioration due to a decrease in the viscosity of the oil film, evaporation of grease, and the like is reduced.

As described above, according to the bearing device 10 of the present embodiment, the lubricant G supplied to the inside of the rolling bearing 20 is pushed and discharged to the outside of the rolling bearing 20 by the axial clearances C1 and C2 between the side surface 32 of the flange portion 31 on the rolling bearing side and the axial end surface 22b of the outer ring 22, adheres to the flange portions 31 of the inner ring spacers 30A and 30B disposed in the vicinity of the rolling bearing 20, is repelled to the outer diameter side by the action of the centrifugal force, and is stored in the lubricant storage space 51. Further, the lubricant is discharged from the lubricant storage space 51 to the outside through the discharge passage. As a result, the agitation resistance of the lubricant G is decreased, heat generation is reduced, a good lubrication state is maintained, and as a result, the service life of the rolling bearing 20 is prolonged. In addition, since the magnitude of the centrifugal force that repels the lubricant G changes according to the rotational speed of the rolling bearing 20, that is, of the inner ring spacers 30A and 30B, it is possible to supply the lubricant appropriately according to the rotational speed.

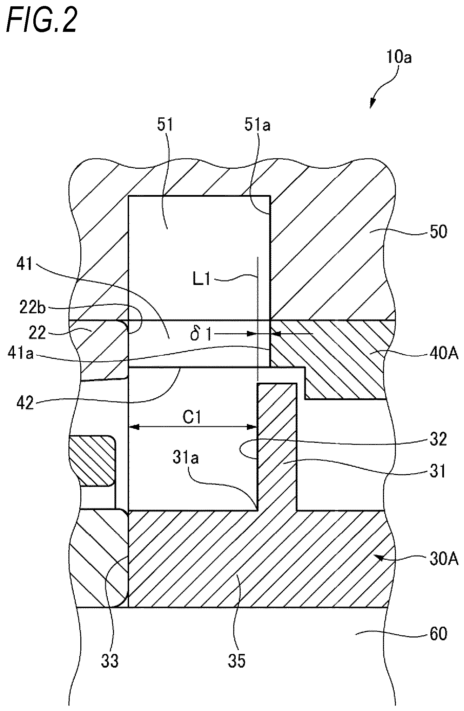

FIG. 2 is a cross-sectional view of a main part of a lubricant discharge structure on a counterbore side of a bearing device according to a first modification of the first embodiment. In the bearing device 10a of the first modification, the flange portion 31 is formed so that, within a range of C1 = 0.5 to 50 mm, a larger axial clearance C1 is ensured between the side surface 32 of the flange portion 31 on the rolling bearing side and the axial end surface 22b of the outer ring 22. As a result, the lubricant G discharged from the rolling bearing 20 is sufficiently stored in the space formed between the outer peripheral surface of the inner ring spacer 30A and the inner peripheral surface of the outer ring spacer 40A by the axial clearance C1, and the lubricant G adhering to the flange portion 31 can be repelled to the outer diameter side by the action of the centrifugal force and discharged to the lubricant storage space 51.

Further, in order to prevent the flange portion 31 larger than an inner diameter of the outer ring spacer 40A from interfering with the outer ring spacer 40A, the larger diameter portion 42 of the outer ring spacer 40A is formed up to an axial position beyond an axial end surface 41a of the notch 41.

Further, the outermost diameter portion of the side surface 32 of the flange portion 31 on the rolling bearing side and an extension line L1 of the side surface 32 are disposed closer to the rolling bearing 20 side than the axial end surface 41a of the notch 41 (that is, δ1 > 0). As a result, the lubricant G that adheres to the flange portion 31 and is repelled is reliably discharged to the lubricant storage space 51 via the notch 41.

An axial end surface 51a of the lubricant storage space 51 having a rectangular cross section, which is away from the rolling bearing 20, is formed at the same axial position as the axial end surface 41a of the notch 41, and the lubricant is reliably discharged to the lubricant storage space 51 via the notch 41.

In addition, the layout of the flange portion 31 of this modification may be applied to the anti-counterbore side.

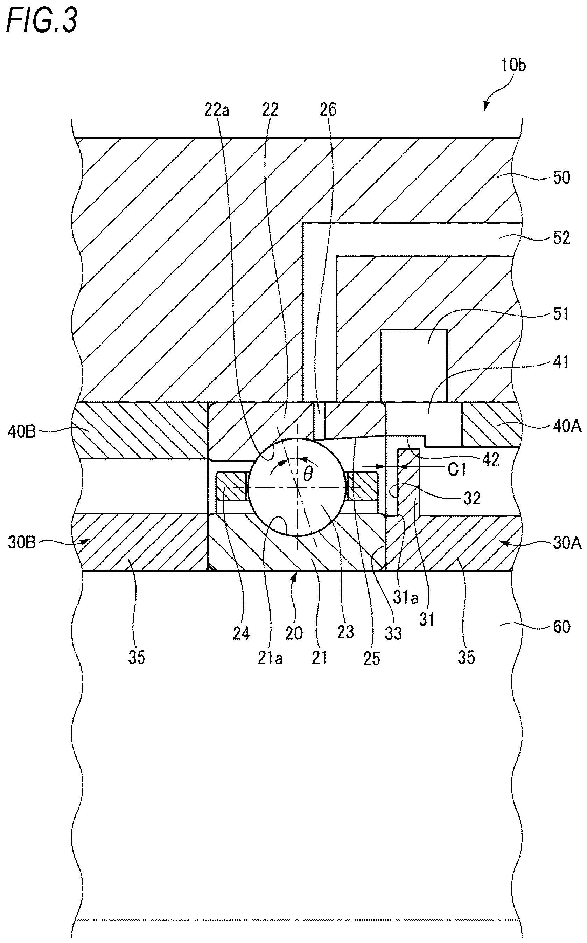

FIG. 3 is a cross-sectional view of a main part of a bearing device according to a second modification of the first embodiment. In the bearing device 10b, the flange portion 31 and the notch 41 are formed only in the inner ring spacer 30A and the outer ring spacer 40A on the side where the counterbore is formed in the axial direction, and the lubricant storage space 51 of the housing 50 is also formed on the counterbore side. The bearing space between the outer peripheral surface of the inner ring 21 and the inner peripheral surface of the outer ring 22 is wider on the counterbore side than on the anti-counterbore side, the amount of lubricant G stored on the counterbore side is large, and the amount of lubricant G discharged to the outside of the rolling bearing is also large. Therefore, the flange portion 31 and the notch 41 may be provided only on the counterbore side.

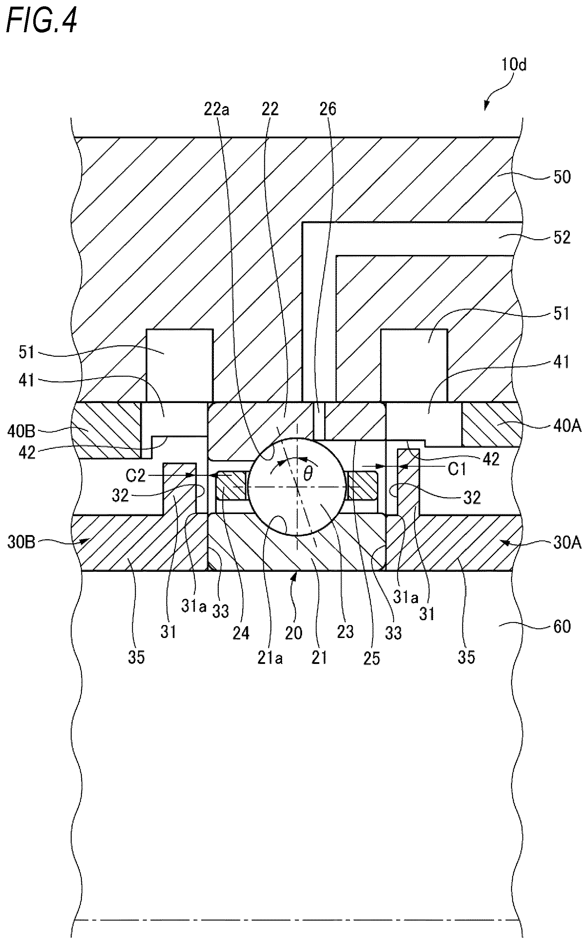

FIG. 4 is a cross-sectional view of a main part of a bearing device according to a third modification of the first embodiment. Like the bearing device 10c, the rolling bearing 20 may have a straight-shaped counterbore 25A with the inner diameter of the inner peripheral surface equal across the axial direction.

In this case also, the lubricant G supplied to the inside of the rolling bearing is discharged to the outside of the rolling bearing, and the lubricant G adhering to the flange portion 31 of the inner ring spacers 30A and 30B is repelled to the outer diameter side by the centrifugal force and is forcibly and continuously stored in the lubricant storage space 51.

### (Second embodiment)

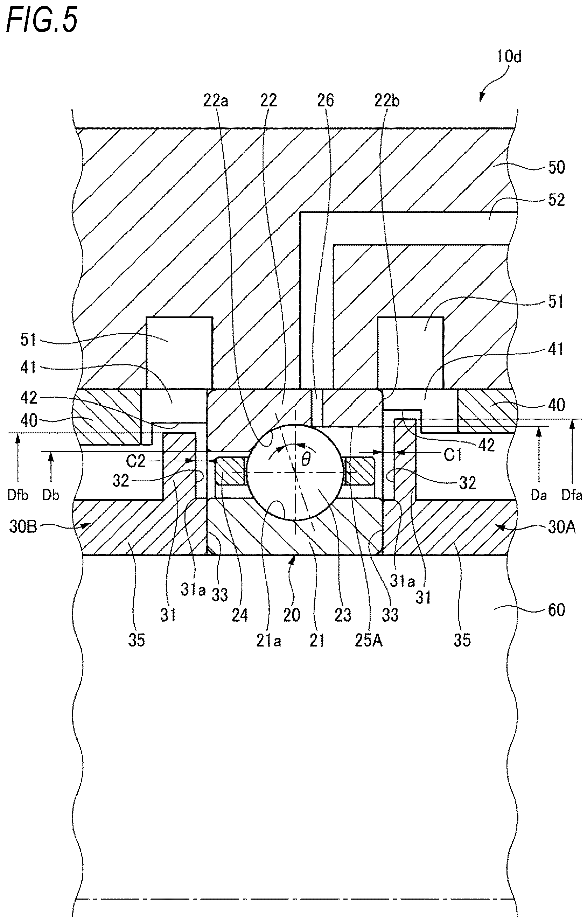

Next, a bearing device according to a second embodiment will be described with reference to FIG. 5. In the bearing device 10d, an outer diameter Dfa of the flange portion 31 of the inner ring spacer 30A is set larger than an end inner diameter Da of the counterbore 25A. Likewise, the outer diameter Dfb of the flange portion 31 of the inner ring spacer 30B is also set larger than the end inner diameter Db on the anti-counterbore side.

As a result, the lubricant G discharged to the outside of the rolling bearing 20 along the inner peripheral surface of the outer ring 22 easily adheres to the side surface 32 of the flange portion 31 on the rolling bearing side, and the lubricant G adhering to the side surface 32 is repelled to the outer diameter side, so that the discharge performance of the lubricant G can be further improved. In addition, since the outer diameters Dfa and Dfb of the flange portion 31 are large, the peripheral speed of the outer peripheral portion of the flange portion 31 increases, the magnitude of the centrifugal force that repels the lubricant G increases, and the lubricant G can be reliably discharged.

Other configurations and operations are the same as those described in the first embodiment.

### (Third embodiment)

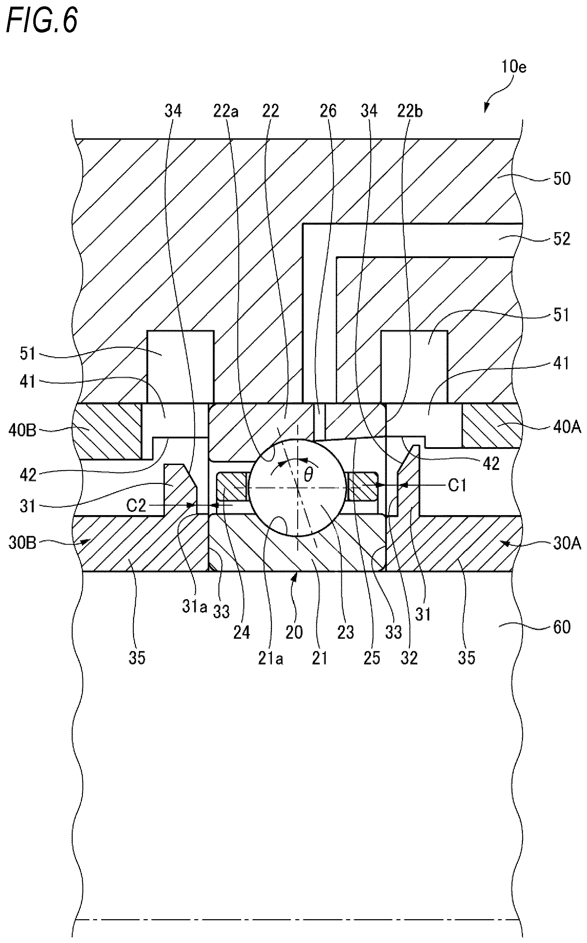

Next, a bearing device according to a third embodiment will be described with reference to FIG. 6. In the bearing device 10e, a tapered portion 34 axially separated from the rolling bearing 20 radially outward is provided on an outer diameter side portion of the side surface 32 of the flange portion 31 of the inner ring spacers 30A and 30B on the rolling bearing side. As a result, the axial clearances C1 and C2 between the side surface of the flange portion 31 on the rolling bearing side and the axial end surface of the rolling bearing 20 are larger on the outer diameter side of the flange portion 31, and the lubricant G pushed out from the rolling bearing 20 can be easily discharged. In addition, the lubricant G adhering to the side surface 32 of the flange portion 31 on the rolling bearing side is guided radially outward along the disk-shaped flat surface and the tapered portion 34 of the side surface 32 of the flange portion 31 on the rolling bearing side by centrifugal force, and is reliably discharged to the lubricant storage space 51, thereby improving the discharge performance. It is to be noted that the tapered portion 34 does not necessarily have to be a conical surface, and may have a gently curved surface.

Other configurations and operations are the same as those described in the first embodiment.

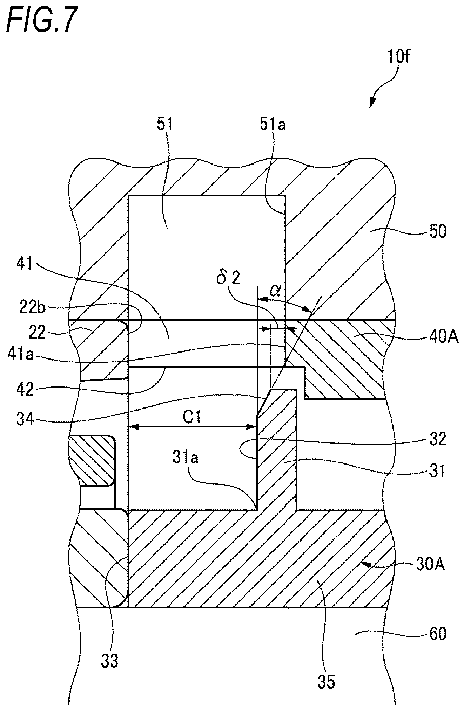

FIG. 7 is a cross-sectional view of a main part of a lubricant discharge structure on the counterbore side of a bearing device according to a modification of the third embodiment. In a bearing device 10f of this modification, like the first modification of the first embodiment, the flange portion 31 is formed so that, within a range of C1 = 0.5 to 50 mm, a larger axial clearance C1 is ensured between the side surface 32 of the flange portion 31 on the rolling bearing side and the axial end surface 22b of the outer ring 22. As a result, the lubricant G discharged from the rolling bearing 20 is sufficiently stored in the space formed between the outer peripheral surface of the inner ring spacer 30A and the inner peripheral surface of the outer ring spacer 40A due to the axial clearance C1, and the lubricant G adhering to the flange portion 31 can be repelled to the outer diameter side by the action of the centrifugal force and discharged to the lubricant storage space 51.

Further, in order to prevent the flange portion 31 larger than the inner diameter of the outer ring spacer 40A from interfering with the outer ring spacer 40A, the larger diameter portion 42 of the outer ring spacer 40A is also formed up to an axial position beyond the axial end surface 41a of the notch 41.

In this modification, the flange portion 31 also has the tapered portion 34 on the outer diameter side portion of the side surface 32 on the rolling bearing side, but the contact angle α is set such that the axial position of the outermost diameter portion of the tapered portion 34 is closer to the rolling bearing 20 than the axial end surface 41a of the notch 41 (that is, δ2 > 0). As a result, the lubricant G that adheres to the flange portion 31 and is repelled is reliably discharged to the lubricant storage space 51 via the notch 41.

It is to be noted that the layout of the flange portion 31 of this modification may also be applied to the anti-counterbore side.

### (Fourth embodiment)

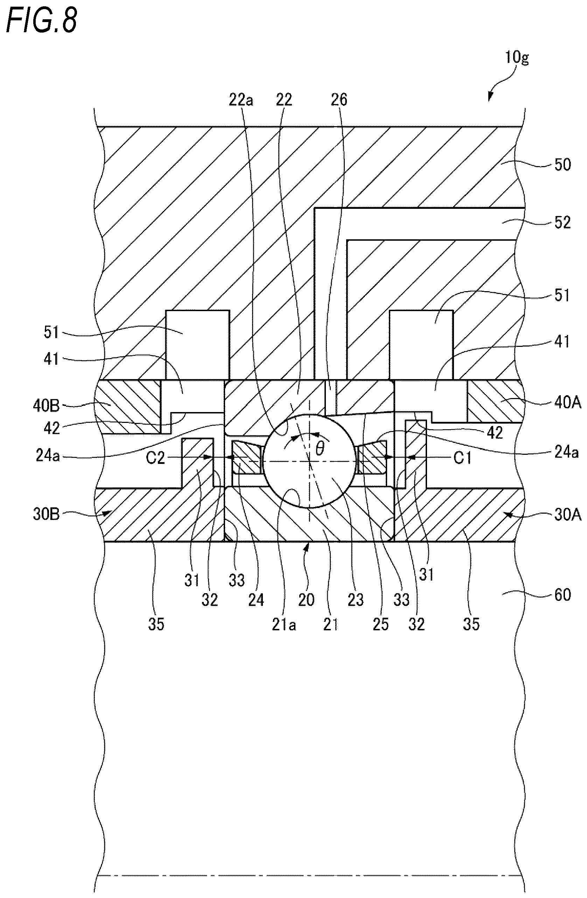

Next, a bearing device according to a fourth embodiment will be described with reference to FIG. 8. In the bearing device 10g, the cage 24 of the rolling bearing 20 has an inclined surface 24a on an outer peripheral surface of which diameter gradually increases with distance from the center of the rolling bearing 20 in the axial direction. As a result, the lubricant G supplied through the lubricant supply path 52 and the oil supply hole 26 of the outer ring 22 and stored in the rolling bearing 20 is guided radially and axially outward along the inclined surface 24a by the action of the centrifugal force accompanying the rotation of the cage 24, is discharged from the rolling bearing 20 to the outside, and easily adheres to the flange portion 31. The lubricant G adhering to the flange portion 31 is repelled radially outward by the centrifugal force and stored in the lubricant storage space 51, so that the lubricant G can be discharged from the rolling bearing 20 more efficiently.

Other configurations and operations are the same as those described in the first embodiment.

It is to be noted that the present invention is not limited to the embodiments described above and modifications, but may encompass modifications or improvements, as appropriate.

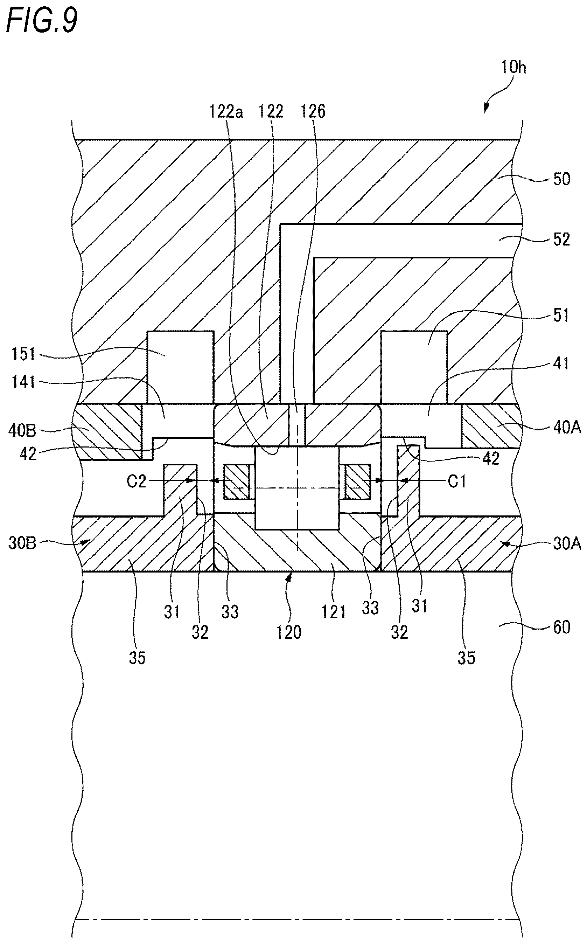

For example, although angular contact ball bearings are used in the embodiments and modifications described above, the rolling bearing of the present invention is not limited thereto. Specifically, like the bearing device 10h shown in FIG. 9, a cylindrical roller bearing may be used as a rolling bearing 120, and in that case also, the configuration of the embodiment described above can be applied to portions other than the rolling bearing 120. That is, in the rolling bearing 120 as well, an inner ring 121 is disposed between the inner ring spacers 30A and 30B having the flange portion 31, an outer ring 122 is disposed between the outer ring spacers 40A and 40B having the notch 41, and further, the outer ring 122 has an oil supply hole 126 penetrating in the radial direction to supply the lubricant G from the lubricant supply path 52 into the bearing space. In this case, since the shape of the rolling bearing 120 is left-right symmetric, the shape of the flange portion 31 of the inner ring spacers 30A and 30B may also be the same.

FIG. 10 is a cross-sectional view showing a main spindle device 200 for a machine tool to which the bearing device 10 of the embodiment described above is applied. The main spindle device 200 is of a motor built-in type, and the spindle 60 is rotatably supported with respect to the housing 50 by a plurality of angular contact ball bearings 20 arranged forwardly with respect to a motor 70 and a cylindrical roller bearing 120 arranged rearwardly with respect to the motor 70. Further, the housing 50 is formed with a plurality of lubricant supply paths 52 communicating between the rear of the housing 50 in the axial direction and the oil supply holes 26 and 126 of the outer rings 22 and 122 of the bearings 20 and 120, respectively. The lubricant supply portion 201 is provided outside the housing 50, and an opening 202 through which the pipe from the lubricant supply portion 201 passes, or a relay joint for relaying the pipe from the lubricant supply portion 201, or the like is provided on the axial rear end face of the housing 50.

Therefore, as the lubricant supply portion 201 is connected to the opening 202, the lubricant is supplied to the plurality of angular contact ball bearings 20 via the plurality of lubricant supply paths 52. In addition, the lubricant is supplied to the cylindrical roller bearing 120 through the lubricant supply portion 52 including a communicating hole 204 formed in the outer ring spacer 40A, in which the lubricant supply portion 201 is connected to an opening 203 provided in the axial rear end surface of the outer ring spacer 40A.

Further, the housing 50 is formed with the pair of lubricant storage spaces 51 and 51 on inner peripheral surfaces on both axial sides corresponding to the bearings 20 and 120. The inner ring spacers 30A and 30B and the outer ring spacers 40A and 40B located on both axial sides of the bearings 20 and 120 are formed with flange portions 31 and 31 and notches 41 and 41, respectively.

As described above, the present specification discloses the following.
(1) A bearing device including a rolling bearing and an inner ring spacer disposed adjacent to an inner ring of the rolling bearing, the bearing device supplying a lubricant from a radial outside to an inside of the rolling bearing via a lubricant supply path,
   in which the inner ring spacer has a flange portion formed to protrude radially outward,
   a base portion of the flange portion is axially separated from an end surface of the inner ring spacer in contact with the inner ring, and
   a side surface of the flange portion on the rolling bearing side has a disk-shaped flat surface extending radially outward from the base portion of the flange portion, and
   an axial clearance between the side surface of the flange portion on the rolling bearing side and an axial end surface of an outer ring of the rolling bearing is 0.5 mm to 50 mm, and
   a space for storing the lubricant pushed out from the inside of the rolling bearing to the outside in an axial direction is formed at the base portion of the flange portion.

With this configuration, the base portion of the flange portion is axially separated from the end surface of the inner ring spacer in contact with the inner ring, and the side surface of the flange portion on the rolling bearing side has a disk-shaped flat surface extending radially from the base portion of the flange portion, so that the lubricant remaining inside the rolling bearing is pushed and discharged to the outside of the rolling bearing by supplying the lubricant, and the lubricant adhering to the flange portion of the inner ring spacer is repelled to the outer diameter side by the centrifugal force and is forcibly and continuously discharged to the outside of the bearing. As a result, it is possible to continuously discharge the supplied lubricant, maintain a good lubrication state, and stably perform a continuous operation for a long period of time.

Furthermore, with this configuration, the lubricant in the rolling bearing can be discharged to the outside, and the lubricant can adhere to the flange portion.

(2) The bearing device according to (1), further including:
a housing to which an outer ring of the rolling bearing is internally fitted and which has a storage space capable of storing the discharged lubricant; and
an outer ring spacer disposed adjacent to the outer ring of the rolling bearing and having an opening communicating with the storage space,
in which the opening is formed radially outside a flange portion of the inner ring spacer.

With this configuration, the lubricant discharged from the rolling bearing can be stored in the storage space of the housing through the opening of the outer ring spacer.

(3) The bearing device according to (2), in which the opening is formed by axially cutting out a portion of the outer ring spacer in a circumferential direction from an end surface in contact with the outer ring, and
an outermost diameter portion of **the** side surface of the flange portion on the rolling bearing side is located closer to the rolling bearing side than an axial end surface of the opening.

With this configuration, the lubricant adhering to the flange portion can be reliably passed through the opening.

(4) The bearing device according to any one of (1) to (3), in which the side surface of the flange portion has a tapered portion axially separated from the side surface of the outer ring radially outward.

With this configuration, the lubricant adhering to the flange portion can be efficiently discharged.

(5) The bearing device according to any one of (1) to (4), in which the rolling bearing is an angular ball bearing in which the outer ring has a tapered or straight-shaped counterbore on an inner peripheral surface on one side in the axial direction with respect to the outer ring raceway surface, and an outer diameter of the flange portion of the inner ring spacer closer to the counterbore is larger than an inner diameter of an end portion of the counterbore of the outer ring.

With this configuration, the lubricant discharged outside the rolling bearing along the inner peripheral surface of the outer ring also easily adheres to the side surface of the flange portion on the rolling bearing side, and the adhered lubricant is repelled to the outer diameter side, so that the discharge performance of the lubricant can be further improved.

(6) The bearing device according to any one of (1) to (5), in which a cage of the rolling bearing has an outer peripheral surface with an inclined surface that increases in diameter toward an outside in an axial direction.

With this configuration, the lubricant adhering to the cage can be efficiently discharged from the rolling bearing to the outside by the centrifugal force.

(7) The bearing device according to any one of (1) to (6), in which the lubricant is grease.

With this configuration, the rolling bearing lubricated with grease can be maintained in a good lubrication state.

(8) A main spindle device for a machine tool, in which a spindle is rotatably supported by the bearing device according to any one of (1) to (7).

With this configuration, the spindle of the main spindle device for a machine tool rotating at high speed can be supported by the bearing having a long service life, which facilitates maintenance.

(9) A main spindle device for a high-speed motor, in which a spindle is rotatably supported by the bearing device according to any one of (1) to (7).

With this configuration, the spindle of the main spindle device for a high-speed motor that rotates at high speed can be supported by the bearing having a long service life, which facilitates maintenance.

This application is based upon Japanese Patent Application No. 2021-14410, filed on February 1, 2021.

### REFERENCE SIGNS LIST

10, 10a to 10h: bearing device
20, 120: rolling bearing
21: inner ring
22: outer ring
24: cage
24a: inclined surface
30A, 30B: inner ring spacer
31: flange portion
32: side surface on rolling bearing side
33: end surface in contact with inner ring
34: tapered portion
35: cylindrical portion
40A, 40B: outer ring spacer
41: notch (opening)
50: housing
51: lubricant storage space
52: lubricant supply path
60: spindle
C1, C2: axial clearance between side surface of flange portion on rolling bearing side and axial end surface of rolling bearing
Da, Db: end inner diameter of outer ring
Dfa, Dfb: outer diameter of flange portion
G: lubricant

## Claims

1. A bearing device (10) comprising a rolling bearing (20) and an inner ring spacer (30A, 30B) disposed adjacent to an inner ring (21) of the rolling bearing (20), the bearing device (10) supplying a lubricant from a radial outside to an inside of the rolling bearing (20) via a lubricant supply path (52), wherein
the inner ring spacer (30A, 30B) has a flange portion (31) formed to protrude radially outward,
a base portion (31a) of the flange portion (31) is axially separated from an end surface (33) of the inner ring spacer (30A, 30B) in contact with the inner ring,
a side surface (32) of the flange portion (31) on the rolling bearing side has a disk-shaped flat surface extending radially outward from the base portion (31a) of the flange portion (31),
**characterised in that**
an axial clearance (C1, C2) between the side surface (32) of the flange portion (31) on the rolling bearing side and an axial end surface (22b) of an outer ring (22) of the rolling bearing (20) is 0.5 mm to 50 mm, and
a space for storing the lubricant (G) pushed out from the inside of the rolling bearing (20) to the outside in an axial direction is formed at the base portion (31a) of the flange portion (31).

2. The bearing device (10) according to claim 1, further comprising:
a housing (50) to which the outer ring (22) of the rolling bearing (20) is internally fitted and which has a storage space (51) capable of storing the discharged lubricant (G); and
an outer ring spacer (40A, 40B) disposed adjacent to the outer ring (22) of the rolling bearing (20) and having an opening (41) communicating with the storage space (51), wherein
the opening (41) is formed radially outside the flange portion (31) of the inner ring spacer (30A, 30B).

3. The bearing device (10) according to claim 2, wherein
the opening (41) is formed by axially cutting out a portion of the outer ring spacer (40A, 40B) in a circumferential direction from an end surface (43) in contact with the outer ring (22), and
an outermost diameter portion of the side surface of the flange portion (31) on the rolling bearing side is located closer to the rolling bearing side than an axial end surface of the opening (41).

4. The bearing device (10) according to any one of claims 1 to 3, wherein the side surface (32) of the flange portion (31) on the rolling bearing side has a tapered portion (34) axially separated from the rolling bearing radially outward.

5. The bearing device according to any one of claims 1 to 4, wherein the rolling bearing (20) is an angular ball bearing in which the outer ring (22) has a tapered or straight-shaped counterbore (25) on an inner peripheral surface on one side in the axial direction with respect to the outer ring raceway surface (22a), and
an outer diameter (Dfa) of the flange portion (31) of the inner ring spacer (30A) closer to the counterbore (25) is larger than an inner diameter (Da) of an end portion of the counterbore (25) of the outer ring (22).

6. The bearing device (10) according to any one of claims 1 to 5, wherein a cage (24) of the rolling bearing (20) has an outer peripheral surface with an inclined surface (24a) that increases in diameter toward an outside in an axial direction.

7. The bearing device (10) according to any one of claims 1 to 6, wherein the lubricant (G) is grease.

8. A main spindle device (200) for a machine tool, wherein a spindle (60) is rotatably supported by the bearing device (10) according to any one of claims 1 to 7.

9. A main spindle device (200) for a high-speed motor, wherein a spindle (60) is rotatably supported by the bearing device (10) according to any one of claims 1 to 7.

## Patentansprüche

1. Lagervorrichtung (10), die ein Wälzlager (20) sowie einen Innenring-Abstandshalter (30A, 30B) umfasst, der an einen Innenring (21) des Wälzlagers (20) angrenzend angeordnet ist, wobei die Lagervorrichtung (10) ein Schmiermittel von einer radialen Außenseite einer Innenseite des Wälzlagers (20) über einen Schmiermittel-Zuführweg (52) zuführt, wobei
der Innenring-Abstandshalter (30A, 30B) einen Flanschabschnitt (31) aufweist, der so ausgebildet ist, dass er radial nach außen vorsteht,
ein Basisabschnitt (31a) des Flanschabschnitts (31) axial von einer Endfläche (33) des Innenring-Abstandshalters (30A, 30B) getrennt ist, die in Kontakt mit dem Innenring ist,
eine Seitenfläche (32) des Flanschabschnitts (31) an der Seite des Wälzlagers eine scheibenförmige plane Fläche aufweist, die sich von dem Basisabschnitt (31a) des Flanschabschnitts (31) radial nach außen erstreckt,
**dadurch gekennzeichnet, dass**
ein axialer Zwischenraum (C1, C2) zwischen der Seitenfläche (32) des Flanschabschnitts (31) an der Seite des Wälzlagers und einer axialen Endfläche (22b) eines Außenrings (22) des Wälzlagers (20) 0,5 mm bis 50 mm beträgt, und
ein Raum zum Aufnehmen des Schmiermittels (G), das aus dem Innenraum des Wälzlagers (20) in einer axialen Richtung nach außen gedrückt wird, an dem Basisabschnitt (31a) des Flanschabschnitts (31) ausgebildet ist.

2. Lagervorrichtung (10) nach Anspruch 1, die des Weiteren umfasst:
ein Gehäuse (50), in das der Außenring (22) des Wälzlagers (20) innen eingepasst ist und das einen Aufnahmeraum (51) aufweist, der das ausgestoßene Schmiermittel (G) aufnehmen kann; sowie
einen Außenring-Abstandshalter (40A, 40B), der an den Außenring (22) des Wälzlagers (20) angrenzend angeordnet ist und eine Öffnung (41) aufweist, die mit dem Aufnahmeraum (51) in Verbindung steht, wobei
die Öffnung (41) radial außerhalb des Flanschabschnitts (31) des Innenring-Abstandshalters (30A, 30B) ausgebildet ist.

3. Lagervorrichtung (10) nach Anspruch 2, wobei
die Öffnung (41) ausgebildet wird, indem ein Abschnitt des Außenring-Abstandshalters (40A, 40B) in einer Umfangsrichtung von einer Endfläche (43), die in Kontakt mit dem Außenring (22) ist, axial ausgeschnitten wird, und
ein am weitesten außen befindlicher Durchmesserabschnitt der Seitenfläche des Flanschabschnitts (31) an der Seite des Wälzlagers näher an der Seite des Wälzlagers liegt als eine axiale Endfläche der Öffnung (41).

4. Lagervorrichtung (10) nach einem der Ansprüche 1 bis 3, wobei die Seitenfläche (32) des Flanschabschnitts (31) an der Seite des Wälzlagers einen sich verjüngenden Abschnitt (34) aufweist, der radial nach außen gerichtet axial von dem Wälzlager getrennt ist.

5. Lagervorrichtung (10) nach einem der Ansprüche 1 bis 4, wobei das Wälzlager (20) ein Schrägkugellager ist, bei dem der Außenring (22) eine konische oder gerade geformte Senkbohrung (25) an einer Innenumfangsfläche an einer Seite in der axialen Richtung in Bezug auf die Außenring-Laufbahnfläche (22a) hat, und
ein Außendurchmesser (Dfa) des Flanschabschnitts (31) des Innenring-Abstandshalters (30A) näher an der Senkbohrung (25) größer ist als ein Innendurchmesser (Da) eines Endabschnitts der Senkbohrung (25) des Außenrings (22).

6. Lagervorrichtung (10) nach einem der Ansprüche 1 bis 5, wobei ein Käfig (24) des Wälzlagers (20) eine Außenumfangsfläche mit einer geneigten Fläche (24a) hat, deren Durchmesser zu einer Außenseite in einer axialen Richtung hin zunimmt.

7. Lagervorrichtung (10) nach einem der Ansprüche 1 bis 6, wobei das Schmiermittel (G) Fett ist.

8. Hauptspindel-Vorrichtung (200) für eine Werkzeugmaschine, wobei eine Spindel (60) drehbar über die Lagervorrichtung (10) nach einem der Ansprüche 1 bis 7 gelagert ist.

9. Hauptspindel-Vorrichtung (200) für einen Hochgeschwindigkeitsmotor, wobei eine Spindel (60) drehbar über die Lagervorrichtung (10) nach einem der Ansprüche 1 bis 7 gelagert ist.

## Revendications

1. Dispositif de palier (10) comprenant un palier à roulement (20) et une entretoise annulaire intérieure (30A, 30B) disposée adjacente à une bague intérieure (21) du palier à roulement (20), le dispositif de palier (10) fournissant un lubrifiant d'une sortie radiale vers un intérieur du palier à roulement (20) via une voie d'alimentation en lubrifiant (52), dans lequel
l'entretoise annulaire intérieure (30A, 30B) présente une partie de bride (31) constituée pour déborder radialement vers l'extérieur,
une partie de base (31a) de la partie de bride (31) est séparée axialement d'une surface d'extrémité (33) de l'entretoise annulaire intérieure (30A, 30B) en contact avec la bague intérieure,
une surface latérale (32) de la partie de bride (31) sur le côté de palier à roulement présente une surface plate en forme de disque s'étendant radialement vers l'extérieur depuis la partie de base (31a) de la partie de bride (31),
**caractérisé en ce que**
une garde axiale (C1, C2) entre la surface latérale (32) de la partie de bride (31) sur le côté de palier à roulement et une surface d'extrémité axiale (22b) d'une bague extérieure (22) du palier à roulement (20) est de 0,5 mm à 50 mm, et
un espace pour stocker le lubrifiant (G) expulsé depuis l'intérieur du palier à roulement (20) vers l'extérieur dans une direction axiale qui est formée au niveau de la partie de base (31a) de la partie de bride (31).

2. Le dispositif de palier (10) selon la revendication 1, comprenant en outre :
un boîtier (50) auquel la bague extérieure (22) du palier à roulement (20) est fixée de manière interne et qui présente un espace de stockage (51) capable de stocker le lubrifiant déchargé (G) ; et
une entretoise annulaire extérieure (40A, 40B) disposée adjacente à la bague extérieure (22) du palier à roulement (20) et présentant une ouverture (41) communiquant avec l'espace de stockage (51), dans lequel
l'ouverture (41) est formée radialement à l'extérieur de la partie de bride (31) de l'entretoise annulaire intérieure (30A, 30B).

3. Le dispositif de palier (10) selon la revendication 2, dans lequel
l'ouverture (41) est constituée par une découpe axiale d'une partie de l'entretoise annulaire extérieure (40A, 40B) dans une direction circonférentielle depuis une surface d'extrémité (43) en contact avec la bague extérieure (22), et
une partie de diamètre le plus à l'extérieur de la surface latérale de la partie de bride (31) sur le côté de palier à roulement est localisée plus près du côté de palier à roulement qu'une surface d'extrémité axiale de l'ouverture (41).

4. Le dispositif de palier (10) selon l'une quelconque des revendications 1 à 3, dans lequel la surface latérale (32) de la partie de bride (31) sur le côté de palier à roulement présente une partie conique (34) séparée axialement du palier à roulement radialement vers l'extérieur.

5. Le dispositif de palier selon l'une quelconque des revendications 1 à 4, dans lequel le palier à roulement (20) est un roulement à billes angulaire dans lequel la bague extérieure (22) présente un lamage de forme droite ou conique (25) sur une surface périphérique intérieure sur un côté dans la direction axiale par rapport à la surface de chemin de roulement de bague extérieure (22a), et
un diamètre extérieur (Dfa) de la partie de bride (31) de l'entretoise annulaire intérieure (30A) plus proche du lamage (25) est plus grand qu'un diamètre intérieur (Da) d'une partie d'extrémité du lamage (25) de la bague extérieure (22).

6. Le dispositif de palier (10) selon l'une quelconque des revendications 1 à 5, dans lequel une cage (24) du palier à roulement (20) présente une surface périphérique extérieure avec une surface inclinée (24a) qui augmente en diamètre vers un extérieur dans une direction axiale.

7. Le dispositif de palier (10) selon l'une quelconque des revendications 1 à 6, dans lequel le lubrifiant (G) est une graisse.

8. Dispositif de broche principal (200) pour un outil d'usinage, dans lequel une broche (60) est soutenue en rotation par le dispositif de palier (10) selon l'une quelconque des revendications 1 à 7.

9. Dispositif de broche principal (200) pour un moteur à haut régime, dans lequel une broche (60) est soutenue en rotation par le dispositif de palier (10) selon l'une quelconque des revendications 1 à 7.
